# EUROPEAN PATENT APPLICATION

(11) **EP 4 501 136 A1**
(43) Date of publication of application: **05.02.2025**
(21) Application number: 23780861.3
(22) Date of filing: 30.03.2023
(51) Int. Cl.: A23L 27/10, A23G 1/34, A23L 2/38, A23L 2/56, A23L 2/60, A23L 7/104

(54) **FLAVORING AGENT**

(30) Priority: 31.03.2022 JP 2022058516
(71) Applicant: Fuji Oil Holdings Inc., Izumisano-shi, Osaka 598-8540 (JP)
(72) Inventor: MIYAZAKI, Chiaki, Tsukubamirai-shi, Ibaraki 300-2436 (JP); MOTOIKE, Hideki, Tsukubamirai-shi, Ibaraki 300-2436 (JP); SUGIYAMA, Masahiro, Tsukubamirai-shi, Ibaraki 300-2436 (JP)
(74) Representative: Boult Wade Tennant LLP
(86) International application number: PCT/JP2023/013147
(87) International publication number: WO 2023/190853

(57) **Abstract**

Provided is a new flavoring agent, more specifically a flavoring agent that can be used as a cocoa substitute. The flavoring agent is produced by treating seeds of a plant belonging to the family Poaceae with a protease and roasting the protease-treated product.

## Description

### Technical Field

### Related Application

This application claims the benefit of priority of Japanese Patent Application No. 2022-058516 filed with the Japan Patent Office on March 31, 2022. The basic priority application is incorporated herein by reference in its entirety.

The present invention relates to a flavoring agent and a method of producing the flavoring agent.

### Background Art

Cocoa is a desirable flavor in many foods. However, areas where cacao beans, the raw material for cocoa, can be harvested are limited, and products produced using cocoa as the main raw material is expensive. Thus, it is desirable to find a flavor material that can at least partially replace real cocoa. Carob is known as such a material (Non-Patent Literature 1). In addition, barley and its processed product, malt, also are known to have a cocoa/chocolate-like aroma (Non-Patent Literature 2).

Patent Literature 1 discloses a method for producing a gourmet food or its base material by bringing malt into contact with a molasses solution and drying and roasting the malt. Patent Literature 2 discloses a technique of baking defatted malt together with a reducing sugar in the presence of steam to obtain a cocoa substitute. Patent Literature 3 discloses a technique of adding water to roasted malt, heating the mixture in an open system, and removing an off-taste by spray drying. Patent Literature 4 discloses a taste-improving agent produced by enzymatically degrading an extracted liquid of roasted grain and adding a saccharide to this.

Heated grain, such as barley, is used as a cocoa substitute and a taste-improving agent. However, an off-taste, such as a grain odor, is perceived, and this is insufficient in terms of the flavor.

### Citation List

### Patent Literature

Patent Literature 1: JP S54-020172 A
Patent Literature 2: JP S55-054857 A
Patent Literature 3: JP 2015-515271 A
Patent Literature 4: JP 2013-252113 A

### Non-Patent Literature

Non-Patent Literature 1: Lanfranchi et al., Quality-Access to Success, Vol. 20, No. 168 (2019) 148-153
Non-Patent Literature 2: Dong et al., Food Research International, 51 (2013) 783-789

### Summary of Invention

### Technical Problem

An object of the present invention is to provide a new flavoring agent, more specifically, a flavoring agent that can be used as a cocoa substitute.

### Solution to Problem

As a result of diligent studies on the above problem, the present inventors have found that the above problem can be solved by roasting a protease-degradation product of seeds of a crop of the family Poaceae, and completed the present invention.

That is, the present invention relates to:
(1) a method for producing a flavoring agent, the method including treating seeds of a plant belonging to the family Poaceae with a protease; and roasting the protease-treated product;
(2) the method for producing a flavoring agent according to (1), wherein when a molecular weight of the protease-treated plant belonging to the family Poaceae is measured by gel filtration, a peak area of a fraction having a molecular weight of 45000 Da or more accounts for from 0 to 22% of a total peak area, and a peak area of a fraction having a molecular weight of 600 Da or less accounts for from 22 to 80% of the total peak area;
(3) the method for producing a flavoring agent according to (1) or (2), the method including mixing the protease-treated product with seeds of a plant belonging to the family Poaceae; and roasting the mixture;
(4) the method for producing a flavoring agent according to (1) or (2), the method including mixing the roasted product of the protease-treated product with a roasted product of seeds of a plant belonging to the family Poaceae;
(5) the method for producing a flavoring agent according to (3) or (4), wherein a ratio of the protease-treated product to the seeds of the plant belonging to the family Poaceae in the mixture is from 100:0 to 1:99;
(6) the method for producing a flavoring agent according to any of (1) to (5), wherein the plant belonging to the family Poaceae is one or more selected from the group consisting of rice, barley, wheat, and sorghum;
(7) the method for producing a flavoring agent according to any of (1) to (6), wherein the protease is one or more selected from the group consisting of a neutral protease, an acid protease, an alkaline protease, and a peptidase;
(8) the method for producing a flavoring agent according to any of (1) to (7), wherein the flavoring agent is a cocoa substitute;
(9) a cocoa substitute produced by the method described in (8);
(10) a cocoa-flavored beverage containing a cocoa component and the cocoa substitute described in (9);
(11) a chocolate-like food containing a cocoa component and the cocoa substitute described in (9); and
(12) a flavoring agent containing a roasted product of a protease-treated plant belonging to the family Poaceae, wherein when a molecular weight of the protease-treated plant belonging to the family Poaceae is measured by gel filtration, a peak area of a fraction having a molecular weight of 45000 Da or more accounts for from 0 to 22% of a total peak area, and a peak area of a fraction having a molecular weight of 600 Da or less accounts for from 22 to 80% of the total peak area.

### Advantageous Effects of Invention

According to the present invention, there can be provided a flavoring agent with thickness and persistence of the flavor. More specifically, the present invention can provide a flavoring agent that can be used as a cocoa substitute. In addition, because of its characteristic flavor, the flavoring agent of the present invention can be used without limitation to a cocoa substitute.

### Description of Embodiments

In an aspect, the present invention provides a method for producing a flavoring agent, the method including treating seeds of a plant belonging to the family Poaceae with a protease and roasting the resulting protease-treated product.

The seeds of a plant belonging to the family Poaceae used in the present aspect are not particularly limited, and examples include rice, wheat, barley, rye, oats, corn, sorghum, foxtail millet, Japanese millet, and common millet. In addition, the plant belonging to the family Poaceae may be a non-glutinous type or a glutinous type. Furthermore, the plant belonging to the family Poaceae may be a polished plant or an unpolished plant. In a more specific embodiment, the seeds of a plant belonging to the family Poaceae are those of one or more types selected from the group consisting of rice, barley, wheat, and sorghum.

The protease used in the present aspect can be appropriately selected from proteases classified into, for example, "acid protease", "neutral protease", "alkaline protease", "metal protease", "thiol protease", and "serine protease", regardless of whether it is derived from animals, plants, or microorganisms. In addition, the protease can also be appropriately selected from proteases classified into, for example, "endo-type protease", "exo-type protease", and "peptidase", according to another classification. One of these proteases may be used individually, or these may be used in combination. Furthermore, these proteases may be used as a preparation having one or more of enzyme activities of these. The protease may or may not be used in combination with an enzyme other than a protease. Moreover, the preparation may or may not have an enzymatic activity other than that of a protease. In a specific embodiment, the protease is one or more selected from the group consisting of a neutral protease, an acid protease, an alkaline protease, and a peptidase.

More specific examples of the protease used in the present aspect include acid proteases derived from microorganisms, such as the genus Aspergillus, the genus Penicillium, and the genus Rhizopus; neutral proteases derived from microorganisms, such as the genus Aspergillus, the genus Streptomyces, and the genus Bacillus; alkaline proteases derived from microorganisms, such as the genus Aspergillus, the genus Streptomyces, and the genus Bacillus; and proteases derived from plants, such as bromelain and papain; and proteases derived from animals, such as trypsin, chymotrypsin, and subtilisin. In addition, these may be used in any combination. In a more specific embodiment, the protease used in the present aspect is a protease derived from the genus Bacillus, such as, for example, a protease derived from *Bacillus amyloliquefaciens* or a protease derived from *Bacillus licheniformis.*

Examples of commercially available proteases that can be used in the present aspect include Protease A, Protease M, Protease P, Protease M "Amano" SD, Protease N, Protease NL, Protease S, Umamizyme, Peptidase R, Newlase A, Newlase F, Samoase PC10F, Samoase GL30, Papain W40, Protin SD-NY10, and Protin SD-AY10 (all the above from Amano Enzyme Inc.); Sumizyme AP, Sumizyme LP, Sumizyme MP, Sumizyme FP, and Sumizyme LPL (all the above from SHINNIHON CHEMICALS Corporation); Denapsin 2P, Denazyme AP, XP-415, Bioplase XL-416F, Bioplase SP-4FG, and Bioplase SP-15FG (all the above from Nagase ChemteX Corporation); Molsin F, PD-Enzyme, IP-Enzyme, and AO-Protease (all the above from Kikkoman Corporation); Punchdase YP-SS, Punchdase NP-2, and Punchdase P (all the above from Yakult Pharmaceutical Industry Co., Ltd.); Flavourzyme, Aroase, Protamex, Neutrase, and Alcalase (all the above from Novozymes); and Kokulase SS and Kokulase P Granules (all the above from Mitsubishi Chemical Corporation). One or two or more enzymes may be selected from these and used.

The amount of the protease to be used is not particularly limited and can be freely set by those skilled in the art according to the raw material to be used and the desired flavor. The amount of the protease to be used varies according to the potency and the like, but in an embodiment, the amount is in the range of 0.01 to 100% based on the mass of the seeds of a plant belonging to the family Poaceae. In a specific embodiment, the amount of the protease or the protease preparation to be used is from 0.1 to 10%, for example, from 0.25 to 8%, from 0.5 to 7.5%, from 1 to 6%, or from 2 to 5% (on a mass basis) relative to the seeds of a plant belonging to the family Poaceae.

The conditions of the protease treatment are not particularly limited and can be freely set by those skilled in the art according to the type of enzyme to be used and the like. In an embodiment, the treatment temperature is from 20 to 80°C, for example, from 40 to 75°C or from 50 to 70°C, the treatment time is from 30 minutes to 24 hours, for example, from 1 to 20 hours, from 2 to 16 hours, from 3 to 12 hours, from 4 to 10 hours, or from 5 to 8 hours, and the treatment pH is from 2 to 12, for example, from 3 to 11, from 4 to 6, or any number between these.

In an embodiment, when the protease-treated product of the seeds of a plant belonging to the family Poaceae is subjected to measurement by gel filtration, the peak area of a fraction having a molecular weight of 45000 Da or more accounts for from 0 to 22%, such as, for example, from 2 to 20% or from 5 to 18%, of the total peak area. In addition, in an embodiment, when the protease-treated product of the seeds of a plant belonging to the family Poaceae is subjected to measurement by gel filtration, the peak area of a fraction having a molecular weight of 600 Da or less accounts for from 22 to 80%, such as, for example, from 30 to 75% or from 50 to 70%, of the total peak area.

In the present specification, the molecular weight distribution can be measured by the following method.

### Method for Measuring Molecular Weight Distribution

In 1 mL of an eluent, 10 mg of a sample is suspended, and the suspension is filtered through a 0.2-µm filter. The filtrate is appropriately diluted, and this is used as a sample solution.

Known proteins and the like used as molecular weight markers are first charged, and a calibration curve is determined from the relationship between the molecular weight and the retention time. The sample solution is then charged, and the content ratio % of each molecular weight fraction is determined by the proportion of the area of a specific molecular weight range (time range) to the chart area of the entire absorbance (1st column is YMC-Pack Diol-300 (YMC Co., Ltd.) and 2^{nd} column YMC-Pack Diol-200 (YMC Co., Ltd.); the eluents are 0.1% SDS, 0.2 M NaCl, and a 50 mM phosphate buffer with a pH of 7.0; the flow rate is 0.5 mL/min; and the detection is at UV 220 nm). Basically, the content ratio % is obtained by rounding the value to one decimal place.

The treated product obtained by the protease treatment may be subjected to the roasting treatment as it is or may be dried before the roasting treatment. Examples of the drying treatment include heat drying, ventilation drying, freeze drying, spray drying, and fluidized bed drying. In an embodiment, the treated product obtained by the protease treatment is dried at a drying temperature of 35 to 75°C, for example, of 40 to 70°C or of 45 to 60°C, for a drying time of 1 to 50 hours, for example, of 5 to 40 hours, of 10 to 35 hours, or of 15 to 30 hours, before roasting.

The conditions of the roasting treatment is not particularly limited and can be freely set by those skilled in the art according to the raw material to be used and the desired flavor. Examples of the roasting method include direct flame roasting, hot air roasting, far-infrared roasting, charcoal fire roasting, and microwave roasting. In an embodiment, the roasting temperature is from 100 to 300°C, for example, from 130 to 280°C, from 150 to 250°C, from 170 to 230°C, or from 180 to 200°C, and the treatment time is from 10 minutes to 5 hours, for example, from 30 minutes to 4 hours, from 1 to 3 hours, or from 1.5 to 2 hours.

In an embodiment, the method of the present aspect further includes mixing a roasted product of protease-untreated seeds of a plant belonging to the family Poaceae with the roasted product of the protease-treated product. In another embodiment, the method of the present aspect includes mixing a protease-treated product with protease-untreated seeds of a plant belonging to the family Poaceae, and roasting the mixture. The roasting conditions in the above embodiment are the same as described above. In an embodiment, the ratio of a protease-treated product to protease-untreated seeds of a plant belonging to the family Poaceae is from 100:0 to 1:99, for example, such as, for example, from 100:0 to 50:50, from 25:75 to from 1:99, from 20:80 to 5:95, from 25:75 to 10:90, from 45:55 to 15:85. The ratio can be freely set by those skilled in the art according to the protease concentration and the like at the time of protease treatment. The plant belonging to the family Poaceae used as the raw material for the protease-treated product and the protease-untreated plant belonging to the family Poaceae to be mixed may be the same or different. In addition, for each, one or more types of plants belonging to the family Poaceae may be mixed. In a certain embodiment, the method of the present aspect does not include mixing a roasted product of a protease-untreated plant belonging to the family Poaceae with the roasted product of the protease-treated product, or mixing a protease-untreated plant belonging to the family Poaceae with the protease-treated product.

In the method of the present aspect, after the roasting treatment, cooling and/or milling treatment may be performed as necessary.

In an aspect, the present invention provides a flavoring agent containing a roasted product of a protease-treated plant belonging to the family Poaceae. In a specific embodiment, the flavoring agent of the present aspect is obtained by carrying out the process specified in the aspect of the above method aspect. All the items described in the aspect of the above method can be applied to the flavoring agent of the present aspect.

An additional raw material may or may not be added to the flavoring agent of the present aspect as long as the function of the flavoring agent is not impaired. Examples of the additional raw material include seasonings, acidulants, sweeteners, spices, colorants, flavors, salts, saccharides, antioxidants, vitamins, stabilizers, thickeners, carriers, fillers, lubricants, surfactants, propellants, preservatives, chelating agents, and pH adjusters. In an embodiment, an aspect of the above method includes adding an additional raw material.

The form of the flavoring agent of the present aspect is not particularly limited, and examples include solids, such as powders, granules, and pellets; semi-solids, such as pastes; and liquids, such as solutions, suspensions, and emulsions. In a specific embodiment, the flavoring agent of the present aspect is in the form of a powder. In an embodiment, an aspect of the method includes forming the flavoring agent into the form described above.

In an embodiment, the flavoring agent of the present aspect can be used as a raw material for food. For example, the flavoring agent of the present aspect can be added to a beverage, such as water, milk, or soy milk, to produce a beverage. In addition, for example, the flavoring agent of the present aspect can be mixed as a confectionery material with raw materials, such as a saccharide and an oil and/or fat. Furthermore, for example, the flavoring agent of the present aspect can be added to a food to impart thickness and persistence of the flavor to the food. Specifically, for example, the flavoring agent of the present aspect can be used as a Japanese dipping sauce or a sauce. The thickness of the flavor referred to in the present specification refers to a sense of richness perceived particularly in a middle taste among the flavors perceived in the order of a top taste, a middle taste, and an aftertaste at the time of eating. The persistence means that the flavor perceived in the middle taste is sufficiently perceived also over the aftertaste.

In an embodiment, the flavoring agent of the present aspect can be used as a cocoa substitute. For example, the flavoring agent of the present aspect can partially or entirely substitute for cocoa. In a specific embodiment, from 1 to 100%, for example, from 10 to 90%, from 20 to 80%, from 30 to 70%, from 40 to 60%, 50% of cocoa in food raw materials can be replaced by an equivalent amount of the flavoring agent of the present aspect. The flavoring agent of the present aspect or the mixture of the flavoring agent of the present aspect and cocoa as a cocoa substitute can be used as a raw material for chocolate-like foods; beverages, such as chocolate beverages and cocoa beverages; powdered beverages; confectioneries; baked confectioneries; and the like in the same manner as cocoa powder.

An example of the chocolate-like food referred to in the present specification is a chocolate or related product. In addition, the chocolate or related product referred to herein refers to not only chocolates, quasi-chocolates, and chocolate-based foods defined by the Japan National Chocolate Industry Fair Trade Council and the Chocolate-Based Food Fair Trade Council but also products containing an oil and/or fat as an essential component and blended with an auxiliary raw materials, such as a saccharide, a powder milk, a cacao raw material (cacao mass, cocoa, or cocoa butter), a dietary fiber, a fruit juice powder, a fruit powder, a tasting material, an emulsifier, a flavor, or a colorant, as necessary in any proportion.

In addition to cacao butter, the oil and/or fat that can be used in the chocolate-like food is exemplified by various animal and plant oils and/or fats, such as high-erucic rapeseed oil, rapeseed oil (canola oil), soybean oil, sunflower seed oil, cottonseed oil, peanut oil, rice bran oil, corn oil, safflower oil, olive oil, kapok oil, sesame oil, evening primrose oil, palm oil, palm kernel oil, coconut oil, medium-chain fatty acid-bound triglyceride (MCT), shea butter, sal fat, cocoa butter substitute fats, babassu oil, milk fat, beef tallow, lard, fish oil, and whale oil; and hydrogenated oils, fractionated oils, and interesterified oils of those.

In an embodiment, the content of the flavoring agent of the present aspect as a cocoa substitute in the chocolate-like food can be freely set by those skilled in the art according to the flavor. In a specific embodiment, the content is 35 mass% or less, for example, from 1 to 30 mass% or from 3 to 25 mass%.

To produce the chocolate-like food, the procedure is carried out in accordance with a common method for producing chocolate. For example, the chocolate-like food is produced by a process, such as rolling, conching, milling with a ball mill, and liquefying a raw material blend containing, in addition to the flavoring agent of the present aspect as a cocoa substitute, an oil and/or fat described above, and as necessary, an auxiliary raw material, such as a saccharide, a milk powder, a cacao raw material (cacao mass, cocoa, or cocoa butter), a dietary fiber, a fruit juice powder, a fruit powder, a tasting material, an emulsifier, a flavor, or a colorant in any proportion. However, the method is not limited to this method.

In a specific embodiment, the flavoring agent of the present aspect as a cocoa substitute can be mixed with a cocoa component and used in a cocoa-flavored beverage. The cocoa-flavored beverage can be produced by applying any common preparation method using a cocoa component, a sweetener, and a dairy product or soymilk product as main raw materials except for using the flavoring agent of the present aspect.

For the cocoa component, for example, a cocoa powder, a cacao mass, and/or the like can be used. In an embodiment, the content of the flavoring agent of the present aspect as a cocoa substitute in the cocoa-flavored beverage is from 0.1 to 10 mass%, for example, from 0.5 to 7.5 mass% or from 1 to 5 mass%.

For the sweetener, any known sweetener can be used, but, for example, one or two or more selected from saccharides, such as sugar, glucose, fructose, an isomerized sugar, a starch syrup, trehalose, maltitol, and sorbitol; aspartame, stevia, glycyrrhizin, thaumatin; and the like are suitable.

The dairy product or soymilk product may be any ordinary product, and examples include milks, whole milk powders, skim milk powders, creams, butters, whole condensed milks, condensed skim milks, modified milk powders, soy milks, defatted soy milks, and soy creams.

### Examples

Hereinafter, embodiments of the present invention will be more specifically described by examples and the like. In examples, "%" and "parts" mean "mass%" and "parts by mass" unless otherwise specified.

### Example 1: Investigation of Various Enzymatic Treatments

### Enzymatic Reaction

To 10 g of a naked barley powder obtained by milling naked barley seeds with a mill (Mill ZM 200 available from Retsch, Filter 1.0 mm → 0.5 mm, 6000 rpm), 7.5 g of water was added. A saccharolytic enzyme preparation shown in Table 1 was added in an amount of 1% relative to the barley, and the mixture was allowed to react at the optimum temperature of the enzyme preparation for 4 hours. A protease preparation or a peptidase preparation was added in an amount of 0.25% relative to the barley, and the mixture was allowed to react at the optimum temperature of the enzyme preparation for 4 hours. After the reaction, the product was dried in a dryer at 45°C for 15 hours.

### Flavor Evaluation

Each enzyme-treated barley obtained in the above (enzymatic reaction) was roasted at 180°C for 30 minutes, and 15 parts by mass of the enzyme-treated barley and 40 parts by mass of a powdered sugar were mixed. A portion of 45 parts by mass of an oil and/or fat (Parkena S, available from Fuji Oil Co., Ltd.) was added to the mixture, and the mixture was milled and liquefied with a ball mill (stainless steel ball mill Shake Master Auto, Biomedical Science Co., Ltd.). The undissolved portion of the oil and/or fat was added and mixed. The mixture was molded, and the flavor was evaluated. The barley not subjected to the enzymatic reaction but treated in the same manner was used as a control. The results are shown in Table 1. A product with perceived thickness and persistence and with no off-taste at all was evaluated as Excellent, a product with a slight off-taste but with perceived thickness and persistence was evaluated as Good, and a product with a strong off-taste and discomfort as chocolate was evaluated as Poor. A test product evaluated as "Good" or better was regarded as acceptable.

**[Table 1]**

| Enzyme species | Enzyme % | Reaction time | Evaluation comment | Evaluation |
|---|---|---|---|---|
| Control (no enzymatic treatment) | None | None | A barley smell was strong, no thickness or persistence of the taste was present | Poor |
| α-Amylase ¹ | 1% | 4 hr | Sweetness persisted | Poor |
| Glucoamylase ² | 1% | 4 hr | Brown sugar-like flavor | Poor |
| Cellulase ³ | 1% | 4 hr | A slight burnt smell | Poor |
| β-Amylase ⁴ | 1% | 4 hr | The roast smell was strong and close to the unreacted flavor tendency | Poor |
| Acid protease⁵ | 0.25% | 4 hr | A roast taste was present in the middle, and persistence in the aftertaste was present | Good |
| Protease ⁶ | 0.25% | 4 hr | Thickness of the taste was present from the top, and richness was perceived | Good |
| Alkaline protease ⁷ | 0.25% | 4 hr | Thickness and persistence of the taste in the middle and later were present | Good |
| Peptidase ⁸ | 0.25% | 4 hr | A malt-like flavor was present, bitterness was present in the middle, and extension and persistence were present in the aftertaste | Good |

| | | | | |
|---|---|---|---|---|
| 1 Uniase L (Yakult Pharmaceutical Industry Co., Ltd.), 2 Sumizyme (SHINNIHON CHEMICALS Corporation), 3 Sucrase C (Mitsubishi Chemical Corporation), 4 β-Amylase F "Amano" (Amano Enzyme Inc.), 5 Sumizyme AP (SHINNIHON CHEMICALS Corporation), 6 Protamex (Novozymes), 7 Alcalase 2.4 L FG (Novozymes), 8 Flavourzyme 1000 L (Novozymes) | | | | |

As shown in Table 1, any type of protease was effective in imparting the thickness and persistence of the taste. In contrast to this, some products obtained from the enzymatic reaction using the saccharolytic enzyme, such as amylase, had a perceived sweet taste, but none of them exhibited thickness or persistence of the flavor.

### Example 2: Mixing of Enzyme-Treated Product and Seeds of Plant of Family Poaceae (Roasting after Mixing)

### Enzymatic Reaction

To 10 g of a naked barley powder obtained by milling naked barley seeds with a mill (Mill ZM 200 available from Retsch, Filter 1.0 mm → 0.5 mm, 6000 rpm), 7.5 g of water was added. A commercially available protease preparation (Protamex, Novozymes) was added in an amount of 0.25%, 1%, or 5% relative to the barley, and the mixture was allowed to react at 50°C for 1 hour. After the reaction, the product was dried in a dryer at 45°C for 15 hours.

### Flavor Evaluation

The enzyme-treated barley obtained in the above (enzymatic reaction) and untreated barley not subjected to the enzymatic reaction were mixed at a mixing ratio shown in Table 2, and the mixture was roasted at 180°C for 30 minutes. Each roasted test product was milled and liquefied with a ball mill (stainless steel ball mill Shake Master Auto, Biomedical Science Co., Ltd.). Finally, the resulting product was mixed according to the formulation in Table 3. The mixture was molded, and the flavor was evaluated. The results are shown in Table 4. A test product with perceived thickness and persistence and with no off-taste at all was evaluated as Excellent, a test product with a slight off-taste but with perceived thickness and persistence was evaluated as Good, and a test product with a strong off-taste and discomfort as chocolate was evaluated as Poor. A test product evaluated as "Good" or better was regarded as acceptable.

**[Table 2]**

| (parts by mass) | | | | |
|---|---|---|---|---|
| | Test Product 1 | Test Product 2 | Test Product 3 | Test Product 4 |
| Untreated barley | 15 | | 11.25 | 14.25 |
| 0.25% Enzyme-treated barley | | 15 | | |
| 1 % Enzyme-treated barley | | | 3.75 | |
| 5% Enzyme-treated barley | | | | 0.75 |
| Total | 15 | 15 | 15 | 15 |

**Table 3**

| (parts by mass) | | | |
|---|---|---|---|
| | Control | Evaluation Area 1 | Evaluation Area 2 |
| Each test product | | 15 | 7.5 |
| Cocoa | 15 | | 7.5 |
| Powdered sugar | 40 | 40 | 40 |
| Oil and/or fat | 45 | 45 | 45 |
| Total | 100 | 100 | 100 |

**[Table 4]**

| | | Enzyme concentration | Evaluation | Evaluation |
|---|---|---|---|---|
| Control | Cocoa | - | A strong cocoa flavor persisted from the top. | Excellent |
| Evaluation Area 1 | Test Product 1 (untreated barley only) | - | A barley smell was present in the top, no persistence was present. | Poor |
| | Test Product 2 (enzyme-treated barley only) | 0.25% | A slightly characteristic flavor was present in the top. Thickness and persistence were present. | Good |
| | product Test Product 3 (mixed product) | 1% | The characteristic flavor in the top was weak. Thickness and persistence were present. | Good |
| | Test Product 4 (mixed product) | 5% | The characteristic flavor in the top was not present. Thickness and persistence were strong. | Excellent |
| Evaluation Area 2 | Test Product 1 (untreated barley only) | - | A barley smell was present in the top. The cocoa flavor in the middle and later was weak. | Poor |
| | Test Product 2 (enzyme-treated barley only) | 0.25% | A slightly characteristic flavor was present in the top to the middle. Thickness and persistence were present. | Good |
| | Test Product 3 (mixed product) | 1% | The characteristic flavor in the top was weak, and the thickness and persistence in the middle and later were stronger than those in Test Product 2. | Good |
| | product) Test Product 4 (mixed product) | 5% | The characteristic flavor in the top was not present, and the thickness and persistence in the middle and later were stronger than those in Test Product 3. | Excellent |

The thickness and persistence of the taste in the middle and later are present in the cocoa but not in the unreacted barley. However, converting a portion of the untreated barley into a protease-treated product was also able to impart such thickness and persistence of the taste.

### Example 3: Mixing of Enzyme-Treated Product and Seeds of Plant of Family Poaceae (Mixing after Roasting)

According to the method described in "Enzymatic Reaction" in Example 2, enzyme-treated barleys were prepared as enzyme-treated barley A by adding Protamex in an amount of 5% relative to the barley and as enzyme-treated barley B by adding Protamex in an amount of 0.25% relative to the barley. Enzyme-untreated barley and enzyme-treated barleys A and B were roasted at 170 to 180°C for 30 minutes, and roasted barley and roasted enzyme-treated barleys A and B were prepared. A mixture of the roasted barley and the roasted enzyme-treated barley (in the present example, a product containing only the roasted barley or only the roasted enzyme-treated barley is also referred to as a "mixture" for convenience) was mixed with a cocoa powder and a powdered sugar according to the formulation shown in Table 5. A portion of 45 parts of plant oil and/or fat was added to the mixture, and the mixture was milled and liquefied with a ball mill (stainless steel ball mill Shake Master Auto, Biomedical Science Co., Ltd.). The undissolved portion of the oil and/or fat and lecithin were added and mixed. The mixture was poured into a mold, allowed to stand at about 20°C, solidified, then removed from the mold, and a chocolate-like molded product was obtained. The results of the flavor evaluation of the resulting chocolate-like molded product are shown in Table 5. A product with perceived thickness and persistence as a chocolate flavor and with no off-taste at all was evaluated as Excellent, a product with a slight off-taste but with perceived thickness and persistence as a chocolate flavor was evaluated as Good, and a product with a strong off-taste and discomfort as chocolate was evaluated as Poor. A product evaluated as "Good" or better was regarded as acceptable.

**[Table 5]**

| | Comparative Production Example 1 | Production Example 1 | Production Example 2 | Production Example 3 | Production Example 4 | Comparative Production Example 2 | Production Example 5 |
|---|---|---|---|---|---|---|---|
| Roasted barley | 7.5 | 7.425 | 7.125 | 6.75 | 5.625 | 3.75 | |
| Roasted enzyme-treated barley A | | 0.075 | 0.375 | 0.75 | 1.875 | 3.75 | |
| Roasted enzyme-treated barley B | | | | | | | 7.5 |
| Cocoa | 7.5 | 7.5 | 7.5 | 7.5 | 7.5 | 7.5 | 7.5 |
| Powdered sugar | 40 | 40 | 40 | 40 | 40 | 40 | 40 |
| Oil and/or fat | 45 | 45 | 45 | 45 | 45 | 45 | 45 |
| Lecithin | 0.2 | 0.2 | 0.2 | 0.2 | 0.2 | 0.2 | 0.2 |
| Total | 100.2 | 100.2 | 100.2 | 100.2 | 100.2 | 100.2 | 100.2 |
| Percentage of enzyme-treated product in mixture | 0 | 1 | 5 | 10 | 25 | 50 | 100 |
| Percentage of plant of family Poaceae in mixture | 100 | 99 | 95 | 90 | 75 | 50 | 0 |
| Evaluation | Poor | Excellent | Excellent | Excellent | Good | Poor | Good |
| | The flavor of barley was strong. It lacked a taste in the middle to the last. | A taste and persistence in the middle were present. | A taste and persistence in the middle and later were present. | A taste and persistence in the middle and later were present. I | A slightly different flavor was perceived in the top, but a taste and persistence in the middle and later were present. | A different flavor was present in the top. Bitterness and a burnt smell were present. | A slightly different flavor was perceived in the top, but a taste and persistence in the middle and later were present. |

Roated enzyme-treated barley A was mixed with the roasted barley, and the mixture was added, and this was able to impart thickness of the taste in the middle and persistence of the taste. With the ratio of roasted enzyme-treated barley A reaching 50%, a butter taste and a burnt smell became perceived. Roasted enzyme-treated barley B, in which the protease concentration was reduced, used even in an amount of 100% as the enzyme-treated barley was able to impart the taste in the middle and the persistence of the taste that are perceived in chocolate.

### Example 4: Examination of Seeds of Various Plants of Family Poaceae

To 10 g of a milled product obtained by milling seeds of each plant belonging to the family Poaceae described in Table 6, 7.5 g of water and a commercially available protease preparation (Protamex, Novozymes) in an amount 5% relative to the seeds of the plant belonging to the family Poaceae were added, and the mixture was allowed to stand to react at 50°C for 8 hours. The reaction product was dried in a drier at 45°C for 15 hours. For each plant belonging to the family Poaceae, 2.85 parts of seeds and 0.15 parts of the protease-treated product were mixed, the mixture was roasted at 180°C for 30 minutes, and a protease-treated product-added product was obtained. The seeds of each plant belonging to the family Poaceae were milled and roasted at 180°C for 30 minutes, and the resulting product was obtained as an unreacted product. Then, 7.5 parts of the unreacted product or the protease-treated product-added product, 7.5 parts of a cocoa powder, and 40 parts of a powdered sugar were mixed. A portion of 45 parts of plant oil and/or fat was added to the mixture, and the mixture was milled and liquefied with a ball mill (stainless steel ball mill Shake Master Auto, Biomedical Science Co., Ltd.). The undissolved portion of the oil and/or fat was added and mixed. The mixture was poured into a mold, allowed to stand at about 20°C, solidified, then removed from the mold, and a chocolate-like molded product was obtained. The flavor of the resulting chocolate-like molded product was evaluated. The results are shown in Table 6. For the evaluation criteria, the thickness and persistence were rated as 2 points for strong and good and as -2 points for weak and poor on the basis of 0 points, and the off-flavor was rated as 2 points for weak and good and as -2 points for strong and poor on the basis of 0 points.

**[Table 6]**

| | Unreacted product | | Protease-treated product-added product | |
|---|---|---|---|---|
| | Thickness and persistence | Off-flavor | Thickness and persistence | Off-flavor |
| Barley (naked barley) | -1 | -1 | 2 | 2 |
| Purple glutinous barley | -1 | -1 | 1 | 2 |
| Barley malt | -1 | -2 | 0 | 0 |
| Rye | -1 | -2 | 0 | 0 |
| Oats | -1 | -2 | 0 | 0 |
| Wheat | -2 | -1 | 1 | 2 |
| Whole wheat flour | -1 | -1 | 1 | 0 |
| White rice | -2 | 2 | 1 | 2 |
| Brown rice | -2 | 1 | 1 | 1 |
| White sorghum | -2 | 2 | 1 | 2 |
| Red sorghum | -2 | -1 | 0 | 0 |

As shown in Table 6, the addition of the protease-treated product to any of the seeds of the plants belonging to the family Poaceae increased the thickness and persistence of the taste and reduced the off-flavor.

### Example 5: Preparation of Cocoa-Flavored Beverages

To a naked barley powder obtained by milling naked barley seeds with a mill, 0.75-fold amount of water was added. A commercially available protease preparation (Protamex, Novozymes) was added in an amount of 5% relative to the barley, and the mixture was allowed to react at 50°C for 8 hours. After the reaction, the product was dried in a dryer at 45°C for 15 hours and then roasted at 170 to 180°C for 30 minutes, and the resulting product was obtained as a roasted enzyme-treated barley. A naked barley flour was roasted at 170 to 180°C for 30 minutes, and the resulting product was obtained as a roasted barley. According to the formulation shown in Table 7, the roasted enzyme-treated barley, the roasted barley, cocoa, and sugar were mixed in a powder state, then mixed with soy milk, and a beverage was prepared. The flavor of the prepared beverage was evaluated. The results are shown in Table 8. A beverage with perceived thickness and persistence as a chocolate flavor and with no off-taste at all was evaluated as Excellent, a beverage with a slight off-taste but with perceived thickness and persistence as a cocoa flavor was evaluated as Good, and a beverage with a strong off-taste and discomfort as a cocoa flavor was evaluated as Poor. A beverage evaluated as "Good" or better was regarded as acceptable.

**[Table 7]**

| | Comparative Production Example 3 | Comparative Production Example 4 | Comparative Production Example 5 | Production Example 6 |
|---|---|---|---|---|
| Roasted barley | | 3.6 | 1.8 | 1.7 |
| Roasted enzyme-treated barley | | | | 0.1 |
| Cocoa | 3.6 | | 1.8 | 1.8 |
| Sugar | 4.90 | 4.90 | 4.90 | 4.90 |
| Soy milk | 91.5 | 91.5 | 91.5 | 91.5 |
| Total | 100.0 | 100.0 | 100.0 | 100.0 |

**[Table 8]**

| | Mixed powder | Flavor evaluation | Evaluation |
|---|---|---|---|
| Comparative Production Example 3 | Cocoa | A cocoa drink with a light aftertaste | Excellent |
| Comparative Production Example 4 | Roasted barley | A grain odor was strong in the top. | Poor |
| Comparative Production Example 5 | Roasted barley 1 : cocoa 1 | Milder than that of Comparative Production Example 4, but a grain odor was perceived. | Good |
| Production Example 6 | Roasted barley + roasted enzyme-treated barley 1 : cocoa 1 | The taste was more present and better than that of Comparative Production Example 5. | Excellent |

As shown in Table 8, for the untreated barley/cocoa mixture, a grain odor was perceived, but Production Example 6, in which a portion of barley was replaced by the enzyme-treated barley, was a beverage easy to drink with a taste more perceived than Comparative Production Example 5.

### Example 6: Molecular Weight Distribution

The molecular weights of various protease-degradation products and a non-degradation product were measured using the molecular weight markers shown in Table 9 below according to "Method for Measuring Molecular Weight Distribution" described above. The raw materials used and the conditions for the protease treatment were as described in Table 10. After the reaction, the product was treated in the same manner as in Example 1, and the thickness and persistence of the taste were evaluated. The results are presented in Table 10.

**[Table 9]**

| Marker | Molecular weight |
|---|---|
| BSA | 67000 |
| OVALBUMIN | 45000 |
| Myoglobin | 18000 |
| Glutathione oxidized form | 612 |

**[Table 10]**

| | Comparative Production Example 6 | Comparative Production Example 7 | Production Example 7 | Production Example 8 | Production Example 9 | Production Example 10 | Production Example 11 |
|---|---|---|---|---|---|---|---|
| Raw material | Barley | Barley | Barley | Barley | Brown rice | Wheat | White sorghum |
| Enzyme name | None | Protamex | Protamex | Protamex | Protamex | Protamex | Protamex |
| Enzyme amount | None | 0.05% | 5% | 0.25% | 5% | 5% | 5% |
| Reaction time | None | 1 hr | 8 hr | 1 hr | 8 hr | 8 hr | 8 hr |
| Thickness | Poor | Poor | Good | Good | Good | Fair | Fair |
| Persistence | Poor | Poor | Good | Good | Good | Fair | Fair |
| Taste-imparting effect | Poor | Poor | Good | Good | Good | Fair | Fair |
| Molecular weight peak area (%) | | | | | | | |
| MW ≥ 45000 | 44.2 | 22.1 | 5.3 | 16.3 | 0.1 | 2.5 | 2.4 |
| MW = from 600 to 45000 | 46.3 | 56.1 | 41.8 | 59.1 | 28.9 | 23.5 | 32.0 |
| MW ≤ 600 | 9.5 | 21.8 | 52.9 | 24.6 | 70.9 | 73.9 | 65.5 |
| Total | 100.0 | 100.0 | 100.0 | 100.0 | 100.0 | 100.0 | 100.0 |

| | | | | | | | |
|---|---|---|---|---|---|---|---|
| MW: Molecular weight | | | | | | | |

As shown in Table 10, in the comparative production examples, in which a fraction having a molecular weight of 45000 or more was 22.1% or more and a fraction having a molecular weight of 600 or less was 21.8% or less, no taste-imparting effect was observed. In all Production Examples 7 to 11, the thickness and persistence of the taste were perceived, and the taste-imparting effect was observed.

### Industrial Applicability

According to the present invention, there can be provided the flavoring agent, in particular, the flavoring agent that can be used as a cocoa substitute. The present invention is applicable to foods, food compositions, food additives, and the like.

## Claims

1. A method for producing a flavoring agent, the method comprising treating seeds of a plant belonging to the family Poaceae with a protease; and roasting the protease-treated product.

2. The method for producing a flavoring agent according to claim 1, wherein when a molecular weight of the protease-treated plant belonging to the family Poaceae is measured by gel filtration, a peak area of a fraction having a molecular weight of 45000 Da or more accounts for from 0 to 22% of a total peak area, and a peak area of a fraction having a molecular weight of 600 Da or less accounts for from 22 to 80% of the total peak area.

3. The method for producing a flavoring agent according to claim 1 or 2, the method comprising mixing the protease-treated product with seeds of a plant belonging to the family Poaceae; and roasting the mixture.

4. The method for producing a flavoring agent according to claim 1 or 2, the method comprising mixing the roasted product of the protease-treated product with a roasted product of seeds of a plant belonging to the family Poaceae.

5. The method for producing a flavoring agent according to claim 3 or 4, wherein a ratio of the protease-treated product to the seeds of the plant belonging to the family Poaceae in the mixture is from 100:0 to 1:99.

6. The method for producing a flavoring agent according to any one of claims 1 to 5, wherein the plant belonging to the family Poaceae is one or more selected from the group consisting of rice, barley, wheat, and sorghum.

7. The method for producing a flavoring agent according to any one of claims 1 to 6, wherein the protease is one or more selected from the group consisting of a neutral protease, an acid protease, an alkaline protease, and a peptidase.

8. The method for producing a flavoring agent according to any one of claims 1 to 7, wherein the flavoring agent is a cocoa substitute.

9. A cocoa substitute produced by the method described in claim 8.

10. A cocoa-flavored beverage comprising a cocoa component and the cocoa substitute described in claim 9.

11. A chocolate-like food comprising a cocoa component and the cocoa substitute described in claim 9.

12. A flavoring agent comprising a roasted product of a protease-treated plant belonging to the family Poaceae, wherein when a molecular weight of the protease-treated plant belonging to the family Poaceae is measured by gel filtration, a peak area of a fraction having a molecular weight of 45000 Da or more accounts for from 0 to 22% of a total peak area, and a peak area of a fraction having a molecular weight of 600 Da or less accounts for from 22 to 80% of the total peak area.
